# EUROPEAN PATENT SPECIFICATION

(11) **EP 4 222 881 B1**
(45) Date of publication and mention of the grant of the patent: **08.04.2026**
(21) Application number: 21777256.5
(22) Date of filing: 10.09.2021
(51) Int. Cl.: H04B 7/06, G01S 5/02, G01S 5/00, G01S 13/76, G01S 13/87

(54) **DYNAMIC ANTENNA ARRAY ANGULAR PHASE DEVIATION COMPENSATION FOR BROAD BEAM POSITIONING**
DYNAMISCHE KOMPENSATION DER WINKELPHASENABWEICHUNG EINER GRUPPENANTENNE ZUR BREITSTRAHLPOSITIONIERUNG
COMPENSATION DE DÉVIATION DE PHASE ANGULAIRE DE RÉSEAU D'ANTENNE DYNAMIQUE POUR POSITIONNEMENT DE FAISCEAU LARGE

(30) Priority: 30.09.2020 US 202063085580 P
(43) Date of publication of application: 09.08.2023
(60) Divisional application: 26160967.1
(73) Proprietor: Nokia Technologies Oy, 02610 Espoo (FI)
(72) Inventor: HARREBEK, Johannes, 9000 Aalborg (DK); KEATING, Ryan, Chicago, IL 60622 (US); BARBU, Oana-Elena, 9000 Aalborg (DK); VEJLGAARD, Benny, 9260 Gistrup (DK); SVENDSEN, Simon, 9000 Aalborg (DK)
(74) Representative: DREISS Patentanwälte PartG mbB
(86) International application number: PCT/EP2021/074884
(87) International publication number: WO 2022/069184

(56) References cited:
- EP-A1- 3 681 217
- US-A1- 2015 189 610
- KEATING RYAN ET AL: "Overview of Positioning in 5G New Radio", 2019 16TH INTERNATIONAL SYMPOSIUM ON WIRELESS COMMUNICATION SYSTEMS (ISWCS), IEEE, 27 August 2019 (2019-08-27), pages 320 - 324, XP033636268, DOI: 10.1109/ISWCS.2019.8877160
- NOKIA ET AL: "Views on mitigating UE and gNB Rx/Tx timing errors", vol. RAN WG1, no. Shanghai, 6 April 2021 (2021-04-06), XP051993347, Retrieved from the Internet <URL:https://ftp.3gpp.org/tsg_ran/WG1_RL1/TSGR1_104b-e/Docs/R1-2103002.zip R1-2103002 timing errors.docx> [retrieved on 20210406]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for dynamic antenna array angular phase deviation compensation for broad beam positioning.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. 5G is mostly built on a new radio (NR), but a 5G (or NG) network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio. US 2015/0189610 A1 discloses enhancing positioning with transmit-timing adjustment information. EP 3 681 217 A1 discloses methods and apparatuses for rtt measurement procedure in a telecommunications network. KEATING RYAN ET AL: "Overview of Positioning in 5G New Radio", 2019 16TH INTERNATIONAL SYMPOSIUM ON WIRELESS COMMUNICATION SYSTEMS (ISWCS), IEEE, 27 August 2019 (2019-08-27), pages 320-324, XP033636268, discloses an overview of Positioning in 5G New Radio.

### SUMMARY:

The invention is defined by independent claims 1, 4, 8 and 9.

Further example embodiments are defined by the dependent claims.

### BRIEF DESCRIPTION OF THE DRAWINGS:

For proper understanding of example embodiments, reference should be made to the accompanying drawings, wherein:
Fig. 1 illustrates an example of an angular phase deviation (APD) for a UE millimeter wave (mmWave) antenna array, according to some embodiments;
Fig. 2 illustrates an example signal diagram for multi-round trip time (multi-RTT) positioning, according to some embodiments;
Fig. 3 illustrates an example signal diagram for uplink time difference of arrival (UL-TDOA) positioning, according to some embodiments;
Fig. 4 illustrates an example flow diagram of a method, according to some embodiments;
Fig. 5 illustrates an example flow diagram of a method, according to some embodiments;
Fig. 6 illustrates an example flow diagram of a method, according to some embodiments;
Fig. 7 illustrates an example flow diagram of a method, according to some embodiments;
Fig. 8a illustrates an example block diagram of an apparatus, according to an embodiment; and
Fig. 8b illustrates an example block diagram of an apparatus, according to another embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for dynamic antenna array angular phase deviation compensation for broad beam positioning is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of" refers to a set that includes one or more of the referenced set members. As such, the phrases "set of," "one or more of," and "at least one of," or equivalent phrases, may be used interchangeably. Further, "or" is intended to mean "and/or," unless explicitly stated otherwise.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

NR may provide radio access technology (RAT)-dependent (for both frequency range 1 (FR1) and frequency range 2 (FR2)) and RAT-independent positioning techniques. In the downlink (DL), a positioning reference signal (PRS) was introduced, and in the uplink (UL), a sounding reference signal (SRS) for positioning (SRS-P) was introduced. For general position accuracy, the sub-meter range may be the target in NR, and the specific target for industrial IoT (IIoT) cases may be further reduced to centimeter accuracy.

Multi-RTT is one technique for positioning that may use both UL and DL measurements/signals. At a high level, the method may operate with multiple network nodes (gNBs) transmitting the DL PRS to the UE and then the UE transmitting the SRS-P to the network nodes. The UE may measure the UE receive-transmit (Rx-Tx) time difference for each cell while each network node measures the network node Rx-Tx time difference for the UE. The measurements may be reported to the location management function (LMF) which can then estimate the RTT to each network node from the UE and can estimate the position of the UE.

In addition to multi-RTT, UL-TDOA may be a UL technique that relies on the SRS-P being transmitted by the UE and received at multiple network nodes that measure the relative time of arrival (RTOA). The RTOA may then be reported to the LMF, which can compute the location estimate of the UE.

Multi-cell RTT is one NR positioning technique that may provide high accuracy due to lack of synchronization errors and the wide bandwidth available (better timing measurement accuracy). At FR2, the UE may beam-form both DL and UL transmissions, and may perform transmit power control (TPC) towards neighbor cells to close the link budget/overcome high path-loss. However, whenever the link budget allows, the UE may also use broad beam configuration for these DL and UL transmissions, thereby covering more gNB's within one beam. At the UE, an assessment of the beam-formed DL PRS time of arrival (TOA) and the beam-formed UL SRS time of departure (TOD) may be used for obtaining accurate multi-cell RTT positioning measurements. In addition, to obtain accurate TOA/TOD measurements, it may be important to have a precise measure of the physical phase reference position for the signal being received or transmitted via the mmWave antenna array.

The antenna array phase center may not align with the physical antenna reference point (ARP), but may be located at an offset. The UE antenna array phase center location may be dynamic and may be sensitive to a number of factors including: 1) the actual UE form-factor design (with current flow influenced by physical dimensions, mounted proximity of components, materials, etc.); 2) the antenna array cover (e.g., polycarbonate/acrylonitrile butadiene styrene (PC-ABS), glass, etc.); 3) the angle of arrival (AOA) and polarization for broad beam configuration; 4) the antenna array beam steering angle; 5) AOA on the curved shape beam pattern for 1 dimensional antenna arrays; and 6) the polarization at the used beam steering angle.

The antenna array phase center may vary dynamically by several centimeters, and if left uncompensated, it may cause impairment by significantly reducing the position estimation accuracy for centimeter accuracy applications like IIoT. By characterization, the phase center offset may be known to the UE for the antenna panels and the supported beam configurations over a beam width, AOA, and polarization. In DL, for both narrow beam and broad beam reception, the UE may derive the AOA locally and may compensate the PRS TOA for the phase center offset. In UL, assuming beam correspondence, the UE may also perform local SRS TOD compensation for narrow beam configuration. However, for broad beam UL configuration, it may not be possible to compensate for the phase offset in the direction of all network nodes, and a single value compensation may compromise the accuracy. From this, it can be understood that there is a need for a network-assisted procedure that compensates for broad beam dynamic antenna array phase center location for optimized UL positioning measurement accuracy.

In the context of an example of a UE with a 1:8 mmWave antenna array, the reference point for reception/transmission of signals may be the phase center of the antenna array and may be located at a physical antenna reference point (ARP). If the phase center is dynamic and not always located at the ARP, for maximized positioning estimation accuracy, there may have to be a compensation of the signal transmission/arrival time to bring back the TOA/TOD UE reference point to the ARP (or any other predefined physical location on the UE). In particular, the radiation phase of the UE form-factor with the 1:8 antenna array mounted at the top in narrow beam configuration, for boresight and +/-50 degrees steering angle for both polarizations, the phase change over polarization and the steering angle, and over the curved shape for each steering angle, may be significant. This significant phase variation behavior may result in a sizable phase center offset variation over steering angle, AOA, and polarization. The phase center offset variation may be several centimeters and may be dependent on both steering angle, AOA, and polarization.

For both narrow beam and broad beam configuration, the phase center position stability of the antenna array may be impacted by the UE form-factor for which current flows are impacted by physical design dimensions, materials used, and mounted proximity of components. As such, while an ideal standalone antenna array may not have to use a phase center offset compensation, mounting such antenna array on a UE form-factor with coating materials, etc. may still result in a need for compensation to achieve positioning accuracy in the centimeter range. In addition, for multi-antenna panel UE's, a panel-specific compensation may be needed due to the panel-specific physical placement on the UE form-factor.

Some embodiments described herein may provide for dynamic antenna array angular phase deviation compensation for broad beam positioning. For example, certain embodiments may provide for multi-RTT positioning where a UE may report TOD compensation values to a serving gNB and/or LMF (and may also report time of departure estimated accuracy (TOD-EA) values (e.g., a measure of an accuracy of a TOD compensation value), in some embodiments). The LMF may calibrate the RTT computation with the received TOD compensation values (and/or the received TOD-EA values when available). The LMF may perform an overall positioning accuracy assessment based on TOD-EA information that is received.

As another example, certain embodiments may provide for UL-TDOA positioning where an LMF may signal calculated assistance information to the UE to request TOD compensation values (and/or TOD-EA values, in some embodiments). The UE may report the TOD and/or TOD-EA values to an LMF, and the LMF may compensate the initial RTOA estimates using the TOD compensation values and/or the TOD-EA values. Prior to performing either the multi-RTT positioning or the UL-TDOA positioning, the UE may signal to the serving gNB a capability to report TOD compensation values. In addition, the UE may signal a capability to report TOD-EA values and/or TOD compensation values for assigned SRSs, in certain embodiments. UL-TDOA and multi-RTT procedures may be two examples of positioning procedures that may be based on determining positioning calculations (e.g., RTT or RTOA), as described herein.

In this way, certain embodiments described herein may provide for a network-assisted procedure that compensates for a broad beam dynamic antenna array phase center location for optimized UL positioning measurement accuracy. This may provide for more accurate positioning of a UE, which improves performance of the UE and/or a network node features that rely on accurate positioning estimates.

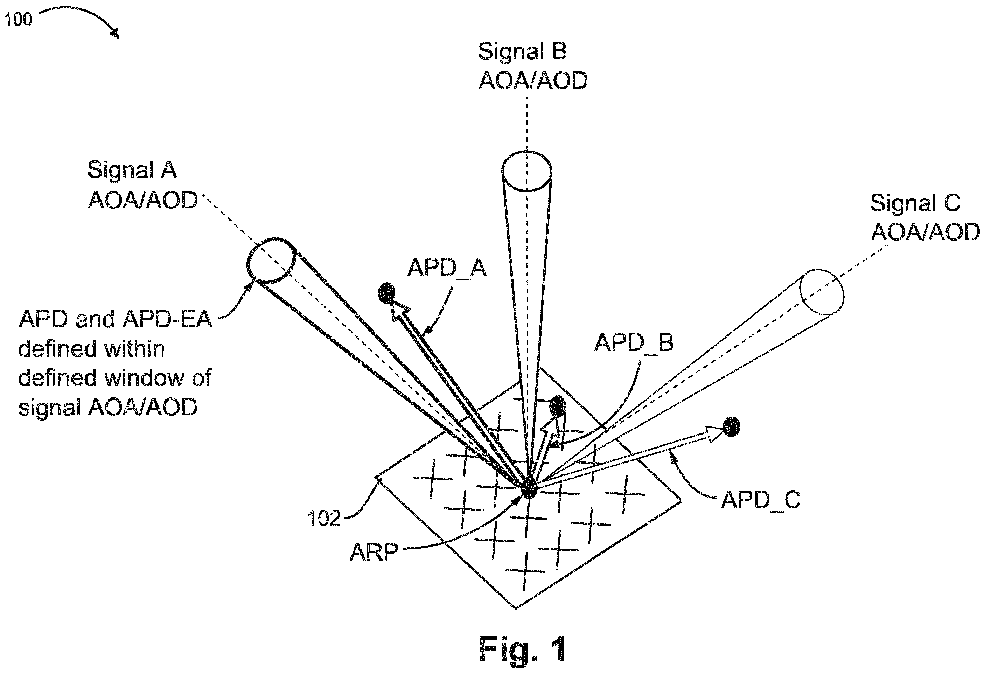

Fig. 1 illustrates an example 100 of an APD for a UE mmWave antenna array, according to some embodiments. The example 100 illustrates an antenna array 102 (e.g., a mmWave antenna array). With respect to the antenna array 102, Fig. 1 further illustrates an APD for a phase center offset at a given angle measured within a given area window. An APD estimated accuracy (APD-EA) parameter may be associated with an APD (e.g., the APD and the APD-EA may be defined within the defined area window of the signal AOA/AOD). For narrow beam configurations, or in a narrow measurement window around the evaluation angle for broad beam configuration, the phase may be flat and the APD-EA may be zero or near-zero. APD and APD-EA values for an AOA may be characterized for each UE antenna array. If the characterization is done with high resolution, then for a given AOA, the APD-EA may approach zero for the associated APD value. The limit value may be zero for an infinitely high resolution, but a tradeoff between characterization burden and target accuracy may occur. As such, the more precisely the AOA/AOD can be estimated, the more precisely the phase offset can be compensated.

As described above, Fig. 1 is provided as an example. Other examples are possible, according to some embodiments.

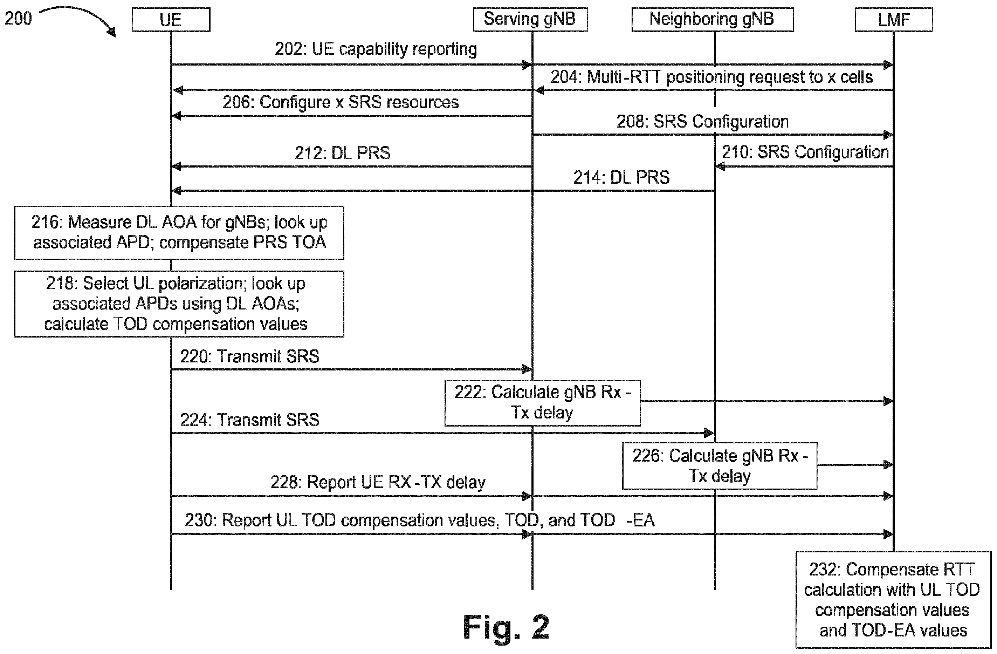

Fig. 2 illustrates an example signal diagram 200 for multi-RTT positioning, according to some embodiments. The example of Fig. 2 illustrates a UE, a serving gNB, a neighboring gNB, and an LMF.

As illustrated at 202, the UE may transmit, and the serving gNB may receive, UE capability reporting. For example, the UE may signal to the serving gNB its capability to report TOD compensation values. In certain embodiments, the UE may additionally signal TOD estimated accuracy (TOD-EA) values and/or TOD compensation values for assigned SRSs. The serving gNB may transmit this reporting to the LMF. As illustrated at 204, the LMF may transmit, and the gNB may receive, a multi-RTT positioning request to *x* cells, where x may represent a set of cells. For example, the LMF may issue a multi-RTT positioning request to the x cells. The serving gNB may transmit the multi-RTT request to the UE.

As illustrated at 206, the serving gNB may transmit, and the UE may receive, a configuration of SRS resources for the x cells. For example, the signaling may configure the UE with x SRS resources. Additionally, or alternatively, DL PRS transmissions may be initiated from the x cells. As illustrated at 208, the serving gNB may transmit, and the LMF may receive, information that includes the SRS configuration provided to the UE. As illustrated at 210, the LMF may transmit, and the neighboring gNB may receive, the information comprising the SRS configuration. As illustrated at 212, the serving gNB may transmit, and the UE may receive, a DL PRS. Similarly, at 214, the neighboring gNB may transmit, and the UE may receive, a DL PRS.

As illustrated at 216, the UE may measure the DL AOA for the gNBs (e.g., the serving gNB and the neighboring gNB). In certain embodiments, the UE may look up associated APDs for the DL AOAs, and may compensate PRS TOAs based on a result of the lookup. For example, the UE may be configured for broad beam Rx and may estimate the DL AOAs for the x cells. The UE may perform a lookup in a lookup table (LUT) of the associated APDs for the cells and/or APD-EA values for the cells. Continuing with the previous example, based on a result of the lookup, the UE may compensate the PRS TOAs for the cells. Because DL channels may be multiple input multiple output (MIMO), the UE may compensate dual polarization reception. For example, the UE may capture DL polarizations and may compensate each polarization in isolation. Additionally, or alternatively, the UE may capture DL polarizations and may compensate the DL polarizations with an offset for highest energy polarization. Additionally, or alternatively, the UE may use sequential single input single output (SISO) for DL PRS measurements (when link budget allows).

As illustrated at 218, the UE may select a UL polarization. In certain embodiments, the UE may look up associated APDs using the measured DL AOAs for the cells. In certain embodiments, the UE may calculate TOD compensation values for SRSs from the cells. For example, the UE may be configured for broad beam Tx. Continuing with the previous example, the UE may select a UL polarization and may calculate compensation values for the TOD. In certain embodiments, the UE may additionally calculate TOD-EA values for the cells by using DL AOA values to index the associated APD values and the APD-EA values from the LUT.

As illustrated at 220, the UE may transmit, and the serving gNB may receive, an SRS. For example, the UE may transmit the SRS without applying APD timing compensation. As illustrated at 222, the serving gNB may calculate gNB Rx-Tx delay and may report this delay to the LMF. For example, the gNB Rx-Tx delay may be the time between the gNB receiving an SRS and transmitting a PRS. The operations illustrated at 224 and 226 may be performed in a manner similar to that described at 220 and 222.

As illustrated at 228, the UE may transmit, and the serving gNB may receive, a reporting that includes UE Rx-Tx delays for the cells. UE Rx-Tx delay may be the time between the UE receiving a PRS and transmitting a SRS. Subtracting the gNB Rx-Tx from the UE Rx-Tx may provide the round-trip time (RTT). The serving gNB may provide, and the LMF may receive, this reporting of the UE Rx-Tx delay.

As illustrated at 230, the UE may report, to the serving gNB, UL TOD compensation values for the gNBs and/or TOD compensation values for the x cells. In certain embodiments, the UE may additionally report TOD-EA values for the x cells. The serving gNB may provide this reporting to the LMF. As illustrated at 232, the LMF may compensate an RTT calculation with the received UL TOD compensation values and the TOD-EA values. In certain embodiments, the LMF may perform a positioning accuracy assessment based on the TOD-EA values reported by the UE.

As indicated above, Fig. 2 is provided as an example. Other examples are possible, according to some embodiments.

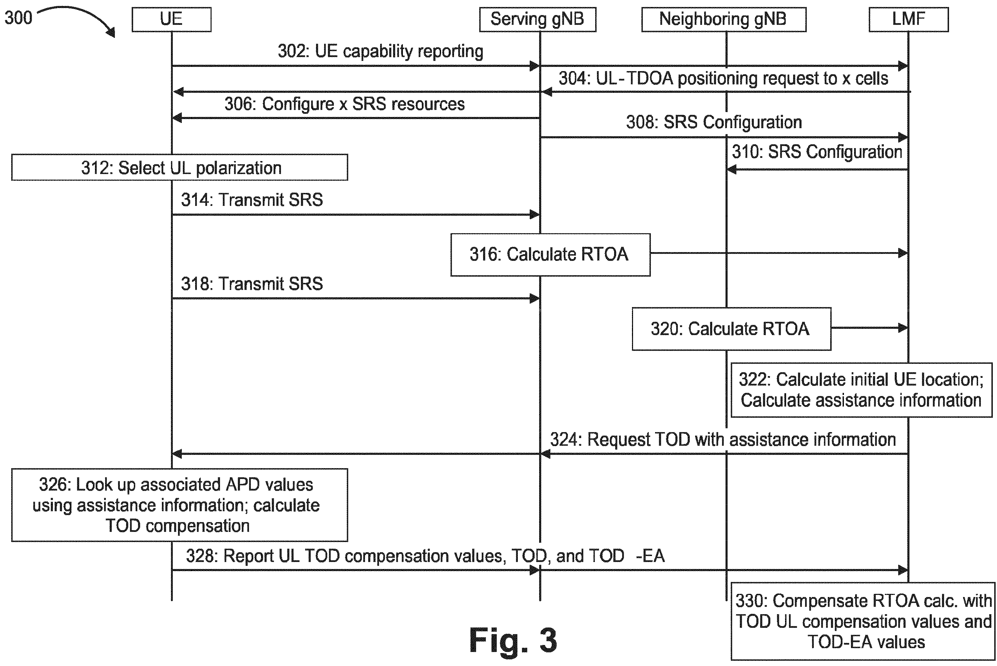

Fig. 3 illustrates an example signal diagram for uplink time difference of arrival (UL-TDOA) positioning, according to some embodiments. The example of Fig. 3 illustrates a UE, a serving gNB, a neighboring gNB, and an LMF.

As illustrated at 302, the UE may transmit, and the serving gNB may receive, UE capability reporting. For example, the UE may signal to the serving gNB its capability to report TOD compensation values. In certain embodiments, the UE may additionally signal TOD estimated accuracy (TOD-EA) values for assigned SRSs. The serving gNB may transmit this reporting to the LMF. As illustrated at 304, the LMF may transmit, and the gNB may receive, a UL-TDOA positioning request to x cells, where x may represent a set of cells. For example, the LMF may issue a UL-TDOA positioning request to x cells. The serving gNB may transmit the UL-TDOA request to the UE.

As illustrated at 306, the serving gNB may transmit, and the UE may receive, a configuration of SRS resources for the x cells. For example, the signaling may configure the UE with x SRS resources. As illustrated at 308, the serving gNB may transmit, and the LMF may receive, information that includes the SRS configuration provided to the UE. As illustrated at 310, the LMF may transmit, and the neighboring gNB may receive, the information that includes the SRS configuration.

As illustrated at 312, the UE may select a UL polarization. For example, the UE may be configured with broad beam Tx and may select the UL polarization. As illustrated at 314, the UE may transmit, and the serving gNB may receive, an SRS. For example, the UE may transmit SRSs to the x cells without applying APD timing compensation. As illustrated at 316, the serving gNB may calculate RTOA and may report the calculated RTOA to the LMF. For example, the gNBs associated with the x cells may calculate RTOAs and may report the calculated RTOAs to the LMF. The operations at 318 and 320 may be performed in a manner similar to the operations at 314 and 316.

As illustrated at 322, the LMF may calculate an initial UE location (e.g., an initial position estimate for the UE). In certain embodiments, the LMF may calculate assistance information. As illustrated at 324, the LMF may transmit, and the UE may receive assistance information including a request for TOD compensation values. For example, the LMF may signal calculated assistance information to the UE to request TOD compensation values for the x cells. In certain embodiments, the LMF may request the UE for TOD-EA values for the x cells. If the UE is orientation aware, this assistance information may include the angle between the UE and the target gNB. If the UE is not orientation aware, this assistance information may include the initial non-corrected UE location (e.g., the UE's exact location may not be known yet) and the gNB locations. In certain embodiments, the UE may separately calculate AOA from the serving gNB based on DL signals (e.g., synchronization signal blocks (SSBs)). Based on this information, the UE may calculate the relative AOD of the other cells.

As illustrated at 326, the UE may look up associated APD values using the assistance information. For example, the UE may calculate compensation values of TOD for the x cells. In certain embodiments, the UE may calculate TOD-EA values for the x cells by indexing the associated APD values for the x cells and APD-EA values for the x cells in the LUT. As illustrated at 328, the UE may report UL TOD compensation values. In certain embodiments, the UE may additionally report TOD compensation values and TOD-EA values. In certain embodiments, the UE may report APD values for the x cells and, in certain embodiments, may report APD-EA values for the x cells. As illustrated at 330, the LMF may compensate a RTOA calculation with TOD UL compensation values and TOD-EA values. For example, the LMF may compensate initial RTOA estimates from 316 and 320 using the received TOD and/or TOD-EA values for the x cells.

As described above, Fig. 3 is provided as an example. Other examples are possible, according to some embodiments.

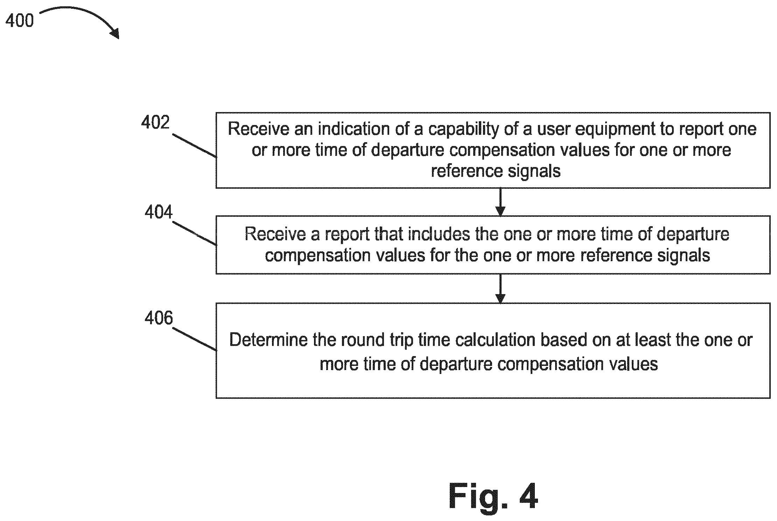

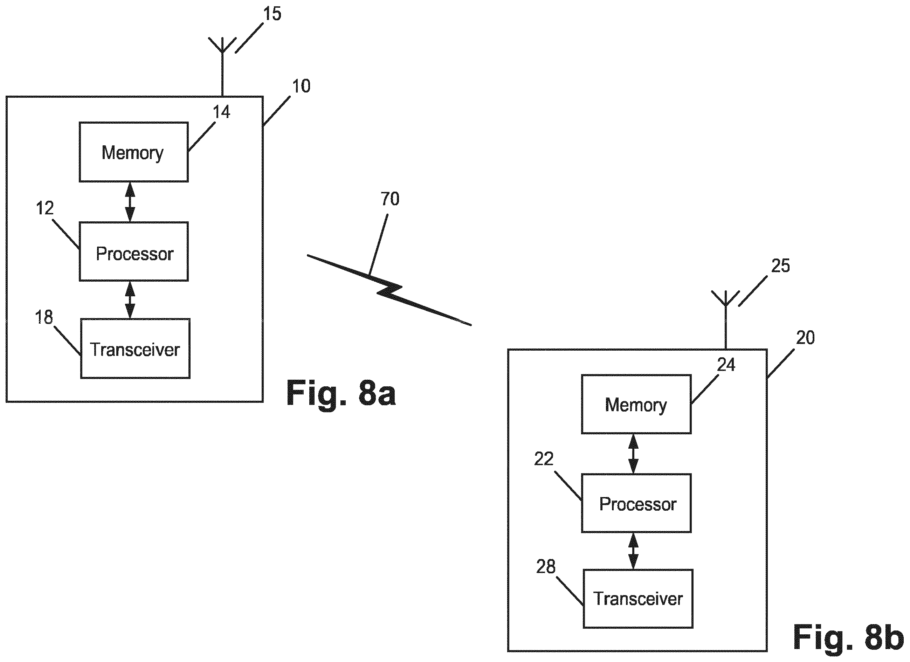

Fig. 4 illustrates an example flow diagram of a method 400, according to some embodiments. For example, Fig. 4 shows example operations of a network node (e.g., apparatus 10 illustrated in, and described with respect to, Fig. 8a). For example, the network node may include an LMF. Some of the operations illustrated in Fig. 4 may be similar to some operations shown in, and described with respect to, Figs. 1 and 2.

In an embodiment, the method may include, at 402, receiving an indication of a capability of a user equipment to report one or more time of departure compensation values for one or more reference signals, for example, in a manner similar to that described at 202 of Fig. 2. The one or more time of departure compensation values may be associated with determining a round trip time calculation. A round trip time calculation may be one example of a positioning calculation, and embodiments described herein may apply to various positioning calculations and/or positioning procedures used to determine the various positioning calculations. The method may include, at 404, receiving a report that includes the one or more time of departure compensation values for the one or more reference signals, for example, in a manner similar to that described at 230 of Fig. 2. The method may include, at 406, determining the round trip time calculation based on at least the one or more time of departure compensation values, for example, in a manner similar to that described at 232 of Fig. 2.

The network node may perform one or more other operations in connection with the method illustrated in Fig. 4. In some embodiments, the one or more reference signals may include one or more sounding reference signals. In some embodiments, the indication may further include an indication of a capability to report one or more time of departure estimated accuracy values for the one or more reference signals. In some embodiments, the report may further include the one or more time of departure estimated accuracy values. In some embodiments, the determining at 406 may include determining the round trip time calculation based on the one or more time of departure compensation values. In some embodiments, the determining at 406 may include determining the round trip time calculation by compensating the round trip time calculation with the one or more time of departure compensation values and the one or more time of departure estimated accuracy values.

In some embodiments, the determining at 406 may include determining the round trip time calculation by compensating the round trip time calculation with the one or more time of departure compensation values. In some embodiments, the performing at 406 may include performing the positioning assessment based on one or more time of departure estimated accuracy values.

In some embodiments, the report may further include one or more indexed angular phase deviation estimated accuracy values associated with one or more time of departure estimated accuracy values, or the report may further include one or more indexed angular phase deviation values associated with the one or more time of departure compensation values. In some embodiments, the determining at 406 may include determining the round trip time calculation based on the one or more indexed angular phase deviation estimated accuracy values or the one or more indexed angular phase deviation values.

As described above, Fig. 4 is provided as an example. Other examples are possible according to some embodiments.

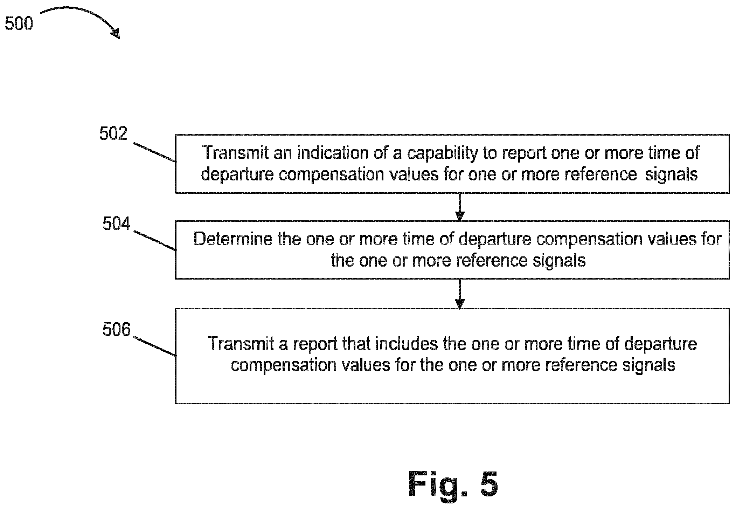

Fig. 5 illustrates an example flow diagram of a method 500, according to some embodiments. For example, Fig. 5 shows example operations of a UE (e.g., apparatus 20 illustrated in, and described with respect to, Fig. 8b). Some of the operations illustrated in Fig. 5 may be similar to some operations shown in, and described with respect to, Figs. 1 and 2.

In an embodiment, the method may include, at 502, transmitting an indication of a capability to report one or more time of departure compensation values for one or more reference signals, for example, in a manner similar to that described at 202 of Fig. 2. The one or more time of departure compensation values may be associated with a round trip time procedure. The method may include, at 504, determining the one or more time of departure compensation values for the one or more reference signals, for example, in a manner similar to that described at 218 of Fig. 2. The method may include, at 506, transmitting a report that includes the one or more time of departure compensation values for the one or more reference signals, for example, in a manner similar to that described at 230 of Fig. 2.

The UE may perform one or more other operations in connection with the method illustrated in Fig. 5. In some embodiments, the one or more reference signals may include one or more sounding reference signals. In some embodiments, the indication may further include an indication of a capability to report one or more time of departure estimated accuracy values. In some embodiments, the UE may determine the one or more time of departure estimated accuracy values for the one or more reference signals in association with determining the one or more time of departure compensation values.

In some embodiments, the UE may determine the one or more time of departure estimated accuracy values based on one or more angle of arrival values, one or more angular phase deviation values, and one or more angular phase deviation estimated accuracy values. In some embodiments, the report may further include the one or more angular phase deviation values or the one or more angular phase deviation estimated accuracy values. In some embodiments, the report may further include the one or more time of departure estimated accuracy values.

As described above, Fig. 5 is provided as an example. Other examples are possible according to some embodiments.

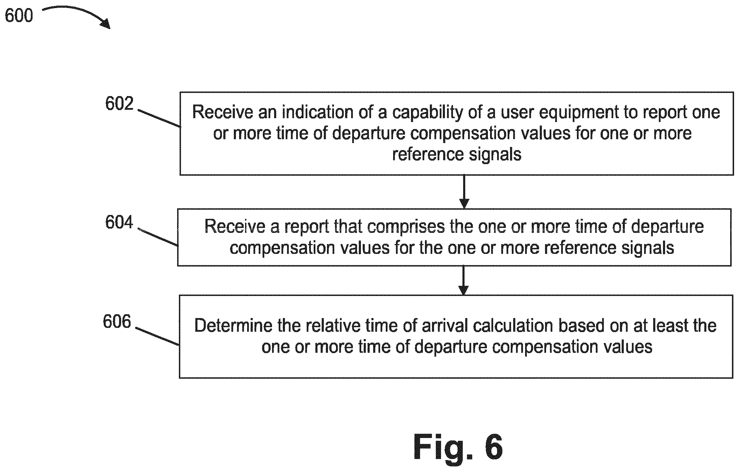

Fig. 6 illustrates an example flow diagram of a method 600, according to some embodiments. For example, Fig. 6 shows example operations of a network node (e.g., apparatus 10 illustrated in, and described with respect to, Fig. 8a). For example, the network node may include an LMF. Some of the operations illustrated in Fig. 6 may be similar to some operations shown in, and described with respect to, Figs. 1 and 3.

In an embodiment, the method may include, at 602, receiving an indication of a capability of a user equipment to report one or more time of departure compensation values for one or more reference signals, for example, in a manner similar to that described at 302 of Fig. 3. The one or more time of departure compensation values may be associated with determining a relative time of arrival calculation. A relative time of arrival calculation may be one example of a positioning calculation, and embodiments described herein may apply to various positioning calculations and/or positioning procedures used to determine the various positioning calculation. The method may include, at 604, receiving a report that comprises the one or more time of departure compensation values for the one or more reference signals, for example, in a manner similar to that described at 328 of Fig. 3. The method may include, at 606, determining the relative time of arrival calculation based on at least the one or more time of departure compensation values, for example, in a manner similar to that described at 330 of Fig. 3.

The network node may perform one or more other operations in connection with the method illustrated in Fig. 6. In some embodiments, the one or more reference signals may include one or more sounding reference signals. In some embodiments, the indication may further include an indication of a capability to report one or more time of departure estimated accuracy values for the one or more reference signals. In some embodiments, the report may further include the one or more time of departure estimated accuracy values.

In some embodiments, the determining at 606 may include determining the relative time of arrival calculation based on the one or more time of departure estimated accuracy values. In some embodiments, the determining at 606 may include determining the relative time of arrival calculation by compensating the relative time of arrival calculation with the one or more time of departure estimated accuracy values. In some embodiments, the determining at 606 may include determining the relative time of arrival calculation by compensating the relative time of arrival calculation with the one or more time of departure compensation values.

In some embodiments, the report may further comprise one or more indexed angular phase deviation estimated accuracy values associated with one or more time of departure estimated accuracy values, or the report may further include one or more indexed angular phase deviation values associated with the one or more time of departure compensation values. In some embodiments, the determining at 606 may include determining the relative time of arrival calculation based on the one or more indexed angular phase deviation estimated accuracy values or the one or more indexed angular phase deviation values.

In some embodiments, the network node may transmit assistance information and a request for the one or more time of departure compensation values (e.g., in a manner similar to that at 324 of Fig. 3), and the receiving of 604 may include receiving the report after transmitting the assistance information. In some embodiments, the assistance information may include an angle between a user equipment and one or more target network nodes when the user equipment is orientation aware, or the assistance information may include an initial non-corrected position of the user equipment and a location of one or more network nodes when the user equipment is not orientation aware.

As described above, Fig. 6 is provided as an example. Other examples are possible according to some embodiments.

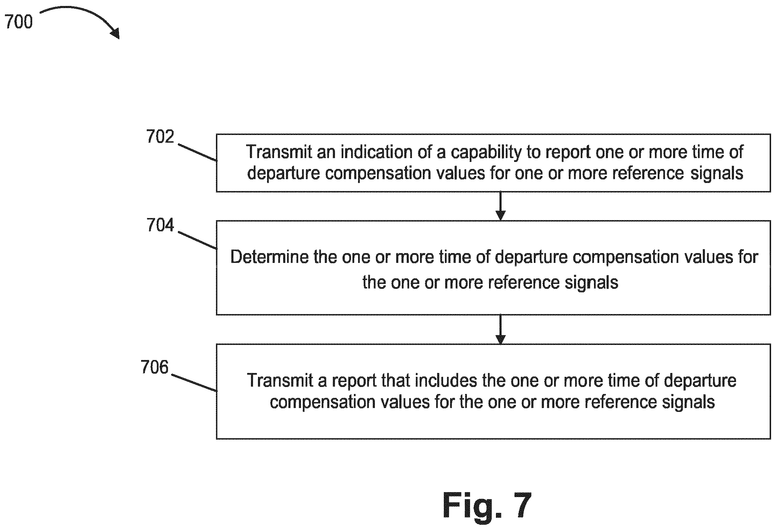

Fig. 7 illustrates an example flow diagram of a method 700, according to some embodiments. For example, Fig. 7 shows example operations of a UE (e.g., apparatus 20 illustrated in, and described with respect to, Fig. 8b). Some of the operations illustrated in Fig. 7 may be similar to some operations shown in, and described with respect to, Figs. 1 and 3.

In an embodiment, the method may include, at 702, transmitting an indication of a capability to report one or more time of departure compensation values for one or more reference signals, for example, in a manner similar to that described at 302 of Fig. 3. The one or more time of departure compensation values may be associated with a relative time of arrival procedure. The method may include, at 704, determining the one or more time of departure compensation values for the one or more reference signals, for example, in a manner similar to that described at 326 of Fig. 3. The method may include, at 706, transmitting a report that includes the one or more time of departure compensation values for the one or more reference signals.

The UE may perform one or more other operations in connection with the method illustrated in Fig. 7. In some embodiments, the one or more reference signals may include one or more sounding reference signals. In some embodiments, the indication may further include an indication of a capability to report one or more time of departure estimated accuracy values. In some embodiments, the method may further include determining the one or more time of departure estimated accuracy values for the one or more reference signals. In some embodiments, the UE may determine the one or more time of departure estimated accuracy values based on one or more angle of arrival values, one or more angular phase deviation values, and one or more angular phase deviation estimated accuracy values. In some embodiments, the report may further include the one or more angular phase deviation values or the one or more angular phase deviation estimated accuracy values.

In some embodiments, the method may include receiving assistance information and a request for the one or more time of departure compensation values (e.g., in a manner similar to that at 324 of Fig. 3), and the determining of 704 may include determining the one or more time of departure compensation values based on the assistance information. In some embodiments, the assistance information may include an angle between the user equipment and one or more target network nodes when the user equipment is orientation aware, or the assistance information may include an initial non-corrected position of the user equipment and a location of one or more network nodes when the user equipment is not orientation aware.

In some embodiments, when the user equipment is not orientation aware, the UE may calculate an angle of arrival from a serving network node based on one or more downlink signals and may calculate a relative angle of departure of one or more other network nodes based on the calculated angle of arrival.

As described above, Fig. 7 is provided as an example. Other examples are possible according to some embodiments.

Fig. 8a illustrates an example of an apparatus 10 according to an embodiment. In an embodiment, apparatus 10 may be a node, host, or server in a communications network or serving such a network. For example, apparatus 10 may be a network node, LMF, satellite, base station, a Node B, an evolved Node B (eNB), 5G Node B or access point, next generation Node B (NG-NB or gNB), and/or a WLAN access point, associated with a radio access network, such as a LTE network, 5G or NR. In some example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 8a.

As illustrated in the example of Fig. 8a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 8a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, LMF, or the like.

According to certain embodiments, apparatus 10 may be controlled by memory 14 and processor 12 to perform the functions associated with any of the embodiments described herein, such as some operations illustrated in, or described with respect to, Figs. 1-4 and 6. For instance, apparatus 10 may be controlled by memory 14 and processor 12 to perform the methods of Figs. 4 and 6.

Fig. 8b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 8b.

As illustrated in the example of Fig. 8b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 8b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry. As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with any of the embodiments described herein, such as some operations illustrated, or described with respect to, in Figs. 1-3, 5, and 7. For instance, in one embodiment, apparatus 20 may be controlled by memory 24 and processor 22 to perform the methods of Figs. 5 and 7.

In some embodiments, an apparatus (e.g., apparatus 10 and/or apparatus 20) may include means for performing a method or any of the variants discussed herein, e.g., a method described with reference to Figs. 4-7. Examples of the means may include one or more processors, memory, and/or computer program codes for causing the performance of the operation.

Therefore, certain example embodiments provide several technological improvements, enhancements, and/or advantages over existing technological processes. For example, one benefit of some example embodiments is improved position accuracy for a UE. Accordingly, the use of some example embodiments results in improved functioning of communications networks and their nodes and, therefore constitute an improvement at least to the technological field of UE position estimation, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations used for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the scope of the invention as defined by the appended claims.

### PARTIAL GLOSSARY

- AoA: Angle of Arrival
- APD: Angular Phase Deviation
- APD-EA: APD - Estimated Accuracy
- ARP: Antenna Reference Point
- BF: Beam-forming
- DL PRS: Downlink Positioning Reference Signal
- gNB: 5G Base Station
- IoT: Internet of Things
- LCS: Location Service
- LMF: Location Management Function
- LPP: LTE Positioning Protocol
- NR: New Radio (5G)
- NRPPa: New Radio Positioning Protocol A
- PCO: Phase Center Offset
- PCV: Phase Center Variation
- RS: Reference Signal
- RSRP: Reference Signal Received Power
- RTT: Round Trip Time
- SRS: Sounding Reference Signal
- SRS-P: SRS for positioning
- UE: User Equipment
- UL: Uplink

## Claims

1. A method performed by a user equipment (UE), comprising:
transmitting (502), an indication of a capability to report one or more time of departure compensation values for one or more reference signals, wherein the one or more time of departure compensation values are associated with a positioning procedure;
determining (504) the one or more time of departure compensation values for the one or more reference signals; and transmitting (506) a report that comprises the one or more time of departure compensation values for the one or more reference signals, determining one or more time of departure estimated accuracy values for the one or more reference signals in association with determining the one or more time of departure compensation values,
wherein determining (504) the one or more time of departure compensation values and the one or more time of departure estimated accuracy values further comprises:
determining the one or more time of departure estimated accuracy values based on one or more angle of arrival values, one or more angular phase deviation values, and one or more angular phase deviation estimated accuracy values, wherein the one or more angular phase deviation values are determined for an angle of arrival, wherein the indication further comprises an indication of a capability to report the one or more time of departure estimated accuracy values.

2. The method according to claim 1, wherein the one or more reference signals comprise one or more sounding reference signals.

3. The method according to claim 1, wherein the report further comprises the one or more angular phase deviation values or the one or more angular phase deviation estimated accuracy values.

4. A method performed by a network node, comprising:
receiving (402), an indication of a capability of a user equipment to report one or more time of departure compensation values for one or more reference signals, wherein the one or more time of departure compensation values are associated with determining a positioning calculation;
receiving (404) a report that comprises the one or more time of departure compensation values for the one or more reference signals; and
determining (406) the positioning calculation based on at least the one or more time of departure compensation values, wherein determining (406) the positioning calculation further comprises:
determining the positioning calculation based on the one or more time of departure compensation values
, wherein the indication further comprises an indication of a capability to report one or more time of departure estimated accuracy values for the one or more reference signals
, wherein the report further comprises the one or more time of departure estimated accuracy values.

5. The method according to claim 4, wherein the report further comprises one or more indexed angular phase deviation estimated accuracy values associated with one or more time of departure estimated accuracy values, or
wherein the report further comprises one or more indexed angular phase deviation values associated with the one or more time of departure compensation values.

6. The method according to claim 5, wherein determining the positioning calculation further comprises:
determining the positioning calculation based on the one or more indexed angular phase deviation estimated accuracy values or the one or more indexed angular phase deviation values.

7. The method according to any of claims 4-6, further comprising:
transmitting assistance information and a request for the one or more time of departure compensation values; and
wherein receiving the report further comprises:
receiving the report after transmitting the assistance information.

8. A user equipment (UE), comprising:
means for transmitting (502) an indication of a capability to report one or more time of departure compensation values for one or more reference signals, wherein the one or more time of departure compensation values are associated with a positioning procedure;
means for determining (504) the one or more time of departure compensation values for the one or more reference signals; and
means for transmitting (506) a report that comprises one or more time of departure compensation values for the one or more reference signals, means for determining the one or more time of departure estimated accuracy values for the one or more reference signals in association with determining the one or more time of departure compensation values,
wherein determining (504) the one or more time of departure compensation values and the one or more time of departure estimated accuracy values further comprises:
determining the one or more time of departure estimated accuracy values based on one or more angle of arrival values, one or more angular phase deviation values, and one or more angular phase deviation estimated accuracy values, wherein the one or more angular phase deviation values are determined for an angle of arrival, wherein the indication further comprises an indication of a capability to report the one or more time of departure estimated accuracy values.

9. A network node, comprising:
means for receiving (602) an indication of a capability of a user equipment to report one or more time of departure compensation values for one or more reference signals, wherein the one or more time of departure compensation values are associated with determining a positioning calculation;
means for receiving (604) a report that comprises the one or more time of departure compensation values for the one or more reference signals; and
means for determining (606) the positioning calculation based on at least the one or more time of departure compensation values, wherein determining the positioning calculation further comprises:
determining the positioning calculation based on the one or more time of departure compensation values, wherein the indication further comprises an indication of a capability to report one or more time of departure estimated accuracy values for the one or more reference signals, wherein the report further comprises the one or more time of departure estimated accuracy values.

## Patentansprüche

1. Verfahren, das von einer Teilnehmereinrichtung (UE) durchgeführt wird und Folgendes umfasst:
Übertragen (502) einer Anzeige einer Fähigkeit zum Melden von einem oder mehreren Abgangszeitkompensationswerten für ein oder mehrere Referenzsignale, wobei der eine oder die mehreren Abgangszeitkompensationswerte mit einer Positionsbestimmungsprozedur verknüpft sind;
Bestimmen (504) des einen oder der mehreren Abgangszeitkompensationswerte für das eine oder die mehreren Referenzsignale; und
Übertragen (506) eines Berichts, der den einen oder die mehreren Abgangszeitkompensationswerte für das eine oder die mehreren Referenzsignale umfasst, Bestimmen von einem oder mehreren geschätzten Abgangszeitgenauigkeitswerten für das eine oder die mehreren Referenzsignale in Verknüpfung mit dem Bestimmen des einen oder der mehreren Abgangszeitkompensationswerte,
wobei das Bestimmen (504) des einen oder der mehreren Abgangszeitkompensationswerte und des einen oder der mehreren geschätzten Abgangszeitgenauigkeitswerte ferner Folgendes umfasst:
Bestimmen des einen oder der mehreren geschätzten Abgangszeitgenauigkeitswerte auf Basis von einem oder mehreren Ankunftswinkelwerten, einem oder mehreren Phasenwinkelabweichungswerten und einem oder mehreren geschätzten Phasenwinkelabweichungsgenauigkeitswerten, wobei der eine oder die mehreren Phasenwinkelabweichungswerte für einen Ankunftswinkel bestimmt werden, wobei die Anzeige ferner eine Anzeige einer Fähigkeit zum Melden des einen oder der mehreren geschätzten Abgangszeitgenauigkeitswerte umfasst.

2. Verfahren nach Anspruch 1, wobei das eine oder die mehreren Referenzsignale ein oder mehrere Sondierungsreferenzsignale umfassen.

3. Verfahren nach Anspruch 1, wobei der Bericht ferner den einen oder die mehreren Phasenwinkelabweichungswerte oder den einen oder die mehreren geschätzten Phasenwinkelabweichungsgenauigkeitswerte umfasst.

4. Verfahren, das von einem Netzwerkknoten durchgeführt wird und Folgendes umfasst:
Empfangen (402) einer Anzeige einer Fähigkeit einer Teilnehmereinrichtung zum Melden von einem oder mehreren Abgangszeitkompensationswerten für ein oder mehrere Referenzsignale, wobei der eine oder die mehreren Abgangszeitkompensationswerte mit dem Bestimmen einer Positionsbestimmungsberechnung verknüpft sind;
Empfangen (404) eines Berichts, der den einen oder die mehreren Abgangszeitkompensationswerte für das eine oder die mehreren Referenzsignale umfasst; und
Bestimmen (406) der Positionsbestimmungsberechnung mindestens auf Basis des einen oder der mehreren Abgangszeitkompensationswerte, wobei das Bestimmen (406) der Positionsbestimmungsberechnung ferner Folgendes umfasst:
Bestimmen der Positionsbestimmungsberechnung auf Basis des einen oder der mehreren Abgangszeitkompensationswerte, wobei die Anzeige ferner eine Anzeige einer Fähigkeit zum Melden von einem oder mehreren geschätzten Abgangszeitgenauigkeitswerten für das eine oder die mehreren Referenzsignale umfasst,
wobei der Bericht ferner den einen oder die mehreren geschätzten Abgangszeitgenauigkeitswerte umfasst.

5. Verfahren nach Anspruch 4, wobei der Bericht ferner einen oder mehrere indizierte geschätzte Phasenwinkelabweichungsgenauigkeitswerte umfasst, die mit einem oder mehreren geschätzten Abgangszeitgenauigkeitswerten verknüpft sind, oder
wobei der Bericht ferner einen oder mehrere indizierte Phasenwinkelabweichungswerte umfasst, die mit dem einen oder den mehreren Abgangszeitkompensationswerten verknüpft sind.

6. Verfahren nach Anspruch 5, wobei das Bestimmen der Positionsbestimmungsberechnung ferner Folgendes umfasst:
Bestimmen der Positionsbestimmungsberechnung auf Basis des einen oder der mehreren indizierten geschätzten Phasenwinkelabweichungsgenauigkeitswerte oder des einen oder der mehreren indizierten Phasenwinkelabweichungswerte basiert.

7. Verfahren nach einem der Ansprüche 4 bis 6, das ferner Folgendes umfasst:
Übertragen von Unterstützungsinformationen und einer Anforderung des einen oder der mehreren Abgangszeitkompensationswerte; und
wobei das Empfangen des Berichts Folgendes umfasst:
Empfangen des Berichts nach Übertragen der Unterstützungsinformationen.

8. Teilnehmereinrichtung (UE), die Folgendes umfasst:
Mittel zum Übertragen (502) einer Anzeige einer Fähigkeit zum Melden von einem oder mehreren Abgangszeitkompensationswerten für ein oder mehrere Referenzsignale, wobei der eine oder die mehreren Abgangszeitkompensationswerte mit einer Positionsbestimmungsprozedur verknüpft sind;
Mittel zum Bestimmen (504) des einen oder der mehreren Abgangszeitkompensationswerte für das eine oder die mehreren Referenzsignale; und
Mittel zum Übertragen (506) eines Berichts, der einen oder mehrere Abgangszeitkompensationswerte für das eine oder die mehreren Referenzsignale umfasst, Mittel zum Bestimmen des einen oder der mehreren geschätzten Abgangszeitgenauigkeitswerte für das eine oder die mehreren Referenzsignale in Verknüpfung mit dem Bestimmen des einen oder der mehreren Abgangszeitkompensationswerte,
wobei das Bestimmen (504) des einen oder der mehreren Abgangszeitkompensationswerte und des einen oder der mehreren geschätzten Abgangszeitgenauigkeitswerte ferner Folgendes umfasst:
Bestimmen des einen oder der mehreren geschätzten Abgangszeitgenauigkeitswerte auf Basis von einem oder mehreren Ankunftswinkelwerten, einem oder mehreren Phasenwinkelabweichungswerten und einem oder mehreren geschätzten Phasenwinkelabweichungsgenauigkeitswerten, wobei der eine oder die mehreren Phasenwinkelabweichungswerte für einen Ankunftswinkel bestimmt werden, wobei die Anzeige ferner eine Anzeige einer Fähigkeit zum Melden des einen oder der mehreren geschätzten Abgangszeitgenauigkeitswerte umfasst.

9. Netzwerkknoten, der Folgendes umfasst:
Mittel zum Empfangen (602) einer Anzeige einer Fähigkeit einer Teilnehmereinrichtung zum Melden von einem oder mehreren Abgangszeitkompensationswerten für ein oder mehrere Referenzsignale, wobei der eine oder die mehreren Abgangszeitkompensationswerte mit dem Bestimmen einer Positionsbestimmungsberechnung verknüpft sind;
Mittel zum Empfangen (604) eines Berichts, der den einen oder die mehreren Abgangszeitkompensationswerte für das eine oder die mehreren Referenzsignale umfasst; und
Mittel zum Bestimmen (606) der Positionsbestimmungsberechnung mindestens auf Basis des einen oder der mehreren Abgangszeitkompensationswerte, wobei das Bestimmen der Positionsbestimmungsberechnung ferner Folgendes umfasst:
Bestimmen der Positionsbestimmungsberechnung auf Basis des einen oder der mehreren Abgangszeitkompensationswerte, wobei die Anzeige ferner eine Anzeige einer Fähigkeit zum Melden von einem oder mehreren geschätzten Abgangszeitgenauigkeitswerten für das eine oder die mehreren Referenzsignale umfasst, wobei der Bericht ferner den einen oder die mehreren geschätzten Abgangszeitgenauigkeitswerte umfasst.

## Revendications

1. Procédé mis en œuvre par un équipement utilisateur (UE), comprenant les étapes suivantes :
transmettre (502) une indication d'une capacité de rapporter une ou plusieurs valeurs de compensation de temps de départ pour un ou plusieurs signaux de référence, dans lequel les une ou plusieurs valeurs de compensation de temps de départ sont associées à une procédure de positionnement ;
déterminer (504) les une ou plusieurs valeurs de compensation de temps de départ pour les un ou plusieurs signaux de référence ; et
transmettre (506) un rapport qui comprend les une ou plusieurs valeurs de compensation de temps de départ pour les un ou plusieurs signaux de référence, déterminer une ou plusieurs valeurs de précision estimées de temps de départ pour les un ou plusieurs signaux de référence en association avec la détermination des une ou plusieurs valeurs de compensation de temps de départ,
dans lequel la détermination (504) des une ou plusieurs valeurs de compensation de temps de départ et des une ou plusieurs valeurs de précision estimées de temps de départ comprend en outre ce qui suit :
déterminer les une ou plusieurs valeurs de précision estimées de temps de départ sur la base d'une ou plusieurs valeurs d'angle d'arrivée, d'une ou plusieurs valeurs de déviation de phase angulaire et d'une ou plusieurs valeurs de précision estimées de déviation de phase angulaire, dans lequel les une ou plusieurs valeurs de déviation de phase angulaire sont déterminées pour un angle d'arrivée, dans lequel l'indication comprend en outre une indication d'une capacité de rapporter les une ou plusieurs valeurs de précision estimées de temps de départ.

2. Procédé selon la revendication 1, dans lequel les un ou plusieurs signaux de référence comprennent un ou plusieurs signaux de référence de sondage.

3. Procédé selon la revendication 1, dans lequel le rapport comprend en outre les une ou plusieurs valeurs de déviation de phase angulaire ou les une ou plusieurs valeurs de précision estimées de déviation de phase angulaire.

4. Procédé mis en œuvre par un nœud de réseau, comprenant les étapes suivantes :
recevoir (402) une indication d'une capacité d'un équipement utilisateur à rapporter une ou plusieurs valeurs de compensation de temps de départ pour un ou plusieurs signaux de référence, dans lequel les une ou plusieurs valeurs de compensation de temps de départ sont associées à la détermination d'un calcul de positionnement ;
recevoir (404) un rapport qui comprend les une ou plusieurs valeurs de compensation de temps de départ pour les un ou plusieurs signaux de référence ; et
déterminer (406) le calcul de positionnement en se basant au moins sur les une ou plusieurs valeurs de compensation de temps de départ, dans lequel la détermination (406) du calcul de positionnement comprend en outre ce qui suit :
déterminer le calcul de positionnement sur la base des une ou plusieurs valeurs de compensation de temps de départ,
dans lequel l'indication comprend en outre une indication d'une capacité de rapporter une ou plusieurs valeurs de précision estimées de temps de départ pour les un ou plusieurs signaux de référence,
dans lequel le rapport comprend en outre les une ou plusieurs valeurs de précision estimées de temps de départ.

5. Procédé selon la revendication 4,
dans lequel le rapport comprend en outre une ou plusieurs valeurs de précision estimées de déviation de phase angulaire indexées associées à une ou plusieurs valeurs de précision estimées de temps de départ, ou
dans lequel le rapport comprend en outre une ou plusieurs valeurs de déviation de phase angulaire indexées associées aux une ou plusieurs valeurs de compensation de temps de départ.

6. Procédé selon la revendication 5, dans lequel la détermination du calcul de positionnement comprend en outre ce qui suit :
déterminer le calcul de positionnement sur la base des une ou plusieurs valeurs de précision estimées de déviation de phase angulaire indexées ou des une ou plusieurs valeurs de déviation de phase angulaire indexées.

7. Procédé selon l'une des revendications 4 à 6, comprenant en outre l'étape suivante :
transmettre des informations d'assistance et une demande pour les une ou plusieurs valeurs de compensation de temps de départ ; et
dans lequel la réception du rapport comprend en outre ce qui suit :
recevoir le rapport après la transmission des informations d'assistance.

8. Équipement utilisateur (UE), comprenant :
des moyens pour transmettre (502) une indication d'une capacité de rapporter une ou plusieurs valeurs de compensation de temps de départ pour un ou plusieurs signaux de référence, dans lequel les une ou plusieurs valeurs de compensation de temps de départ sont associées à une procédure de positionnement ;
des moyens pour déterminer (504) les une ou plusieurs valeurs de compensation de temps de départ pour les un ou plusieurs signaux de référence ; et
des moyens pour transmettre (506) un rapport qui comprend une ou plusieurs valeurs de compensation de temps de départ pour les un ou plusieurs signaux de référence, des moyens pour déterminer les une ou plusieurs valeurs de précision estimées de temps de départ pour les un ou plusieurs signaux de référence en association avec la détermination des une ou plusieurs valeurs de compensation de temps de départ,
dans lequel la détermination (504) des une ou plusieurs valeurs de compensation de temps de départ et des une ou plusieurs valeurs de précision estimées de temps de départ comprend en outre ce qui suit :
déterminer les une ou plusieurs valeurs de précision estimées de temps de départ sur la base d'une ou plusieurs valeurs d'angle d'arrivée, d'une ou plusieurs valeurs de déviation de phase angulaire et d'une ou plusieurs valeurs de précision estimées de déviation de phase angulaire, dans lequel les une ou plusieurs valeurs de déviation de phase angulaire sont déterminées pour un angle d'arrivée, dans lequel l'indication comprend en outre une indication d'une capacité de rapporter les une ou plusieurs valeurs de précision estimées de temps de départ.

9. Nœud de réseau, comprenant :
des moyens pour recevoir (602) une indication d'une capacité d'un équipement utilisateur à rapporter une ou plusieurs valeurs de compensation de temps de départ pour un ou plusieurs signaux de référence, dans lequel les une ou plusieurs valeurs de compensation de temps de départ sont associées à la détermination d'un calcul de positionnement ;
des moyens pour recevoir (604) un rapport qui comprend les une ou plusieurs valeurs de compensation de temps de départ pour les un ou plusieurs signaux de référence ; et
des moyens pour déterminer (606) le calcul de positionnement en se basant au moins sur les une ou plusieurs valeurs de compensation de temps de départ, dans lequel la détermination du calcul de positionnement comprend en outre ce qui suit :
déterminer le calcul de positionnement sur la base des une ou plusieurs valeurs de compensation de temps de départ, dans lequel l'indication comprend en outre une indication d'une capacité de rapporter une ou plusieurs valeurs de précision estimées de temps de départ pour les un ou plusieurs signaux de référence, dans lequel le rapport comprend en outre les une ou plusieurs valeurs de précision estimées de temps de départ.
